Europäisches Patentamt

(19) European Patent Office

Office européen des brevets

(11) Publication number: **0 053 186**
**B1**

(12) **EUROPEAN PATENT SPECIFICATION**

(45) Date of publication of patent specification: 07.08.85

(51) Int. Cl.⁴: **F 02 D 5/02, G 01 F 1/32**

(21) Application number: 81901127.1

(22) Date of filing: 23.04.81

(86) International application number:
PCT/JP81/00097

(87) International publication number:
WO 81/03523 10.12.81 Gazette 81/29

(54) **Method and Apparatus for electrically controlling fuel injection.**

(30) Priority: 26.05.80 JP 70574/80

(43) Date of publication of application:
09.06.82 Bulletin 82/23

(45) Publication of the grant of the patent:
07.08.85 Bulletin 85/32

(84) Designated Contracting States:
DE FR GB

(56) References cited:
GB-A-1 483 204
JP-A-50 148 722
JP-A-51 130 719
JP-A-54 106 720
JP-A-55 057 635
US-A-3 616 693
US-A-4 142 407

Instruments and Control Systems, vol.41, no.3,
March 1968, Radnor (USA), A.E. Rodely: "The
Swirl Flowmeter", pp.109-111

(73) Proprietor: MITSUBISHI DENKI KABUSHIKI
KAISHA
2-3, Marunouchi 2-chome Chiyoda-ku
Tokyo 100 (JP)

(72) Inventor: ASAYAMA, Yoshiaki
Himeji Seisakusho 840 Chiyoda-cho
Himeji-shi, Hyogo 670 (JP)

(74) Representative: White, Martin David et al
Marks & Clerk 57/60 Lincoln's Inn Fields
London WC2A 3LS (GB)

Courier Press, Leamington Spa, England.

## Description

This invention relates to a method of electronically controlling fuel injection for the internal combustion engines used in automobiles and to an engine which operates by means of such a method, and in particular relates to electronically controlled fuel injection for internal combustion engines using a Karman vortex flow meter which detects the amount of intake air to the engine, and an electromagnetic valve for injecting fuel which injects fuel synchronously with a frequency output from the Karman vortex flow meter.

As is generally known, a Karman vortex flow meter produces a frequency output which corresponds to a vortex velocity (number of Karman vortices) which is proportional to the intake air flow to be detected. Methods of injection feeding a fixed quantity of fuel to an engine synchronously with a frequency output proportional to the intake airflow have been proposed in GB—A—1483204, US—A—4142407, Japanese Utility Model Laid Open No. 133919/1978, and Japanese Patent Laid Open No. 5448/1979.

In such Karman vortex flow meters, the Karman vortex frequency f is related to the width d of the vortex generating body, and the airflow velocity v, by the equation

$$f = St\frac{v}{d}$$

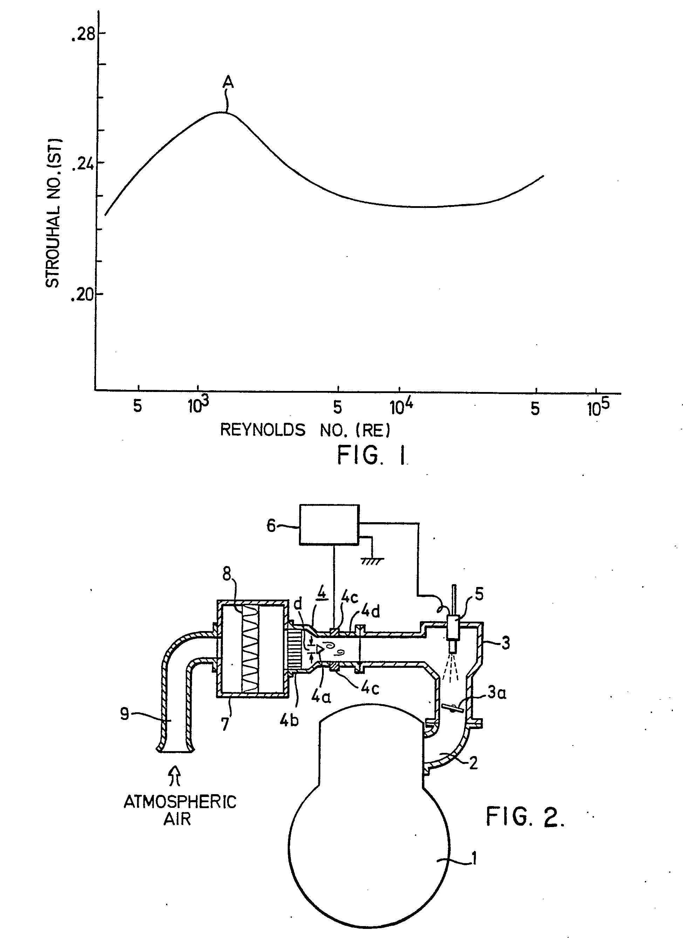

In this equation, St is a constant known as the Strouhal number. It has been found that the Strouhal number, as shown in figure 1, is not strictly constant but varies in accordance with the Reynolds number, Re, which is proportional to the product of the abovementioned d and v. Accordingly, it is necessary to compensate for the variations in the Strouhal number when fuel is injection fed to the engine synchronously with the abovementioned Karmen vortex frequency f. In the fuel injection systems described in the prior art, the internal combustion engines have been so designed and operated that for all engine speeds the Reynolds number of the intake air flow is in the range for which the Strouhal number is effectively constant. A disadvantage which arises from this is that, because the fuel injection frequency is proportional to the intake airflow, so during idling of the engine, when the intake airflow is small, the vortex frequency and hence the injection frequency become extremely low, and the idling becomes unstable. Accordingly, in said idling state, it may be considered to increase the airflow velocity v, or to reduce the width d of the vortex generating body, in order to increase the Karman vortex frequency f. However, increasing the airflow velocity v also increases pressure losses, and reducing the width d of the vortex generating body results in the size of the Karman vortices produced being made smaller, making it difficult to detect the Karman vortices, while pulsation of the intake air might disturb the generation of Karman vortices, making it impossible to detect with accuracy.

The object of this invention is to eliminate the aforementioned drawbacks of the prior art by making it possible to increase the fuel injection frequency during idling, for a stable idle, without increasing pressure losses.

This is achieved, according to the invention, in that idling of the engine is conducted in the vicinity of an air intake flow speed at which the Strouhal number (St) as a function of Reynolds number (Re) is substantially a maximum, in the low flow velocity range of the Karman vortex flow meter.

As mentioned above, in known systems the Reynolds number has been maintained in the range for which St is effectively constant. The behaviour of St has not been studied in detail in the range of low Re for which St is not constant and this range has not been considered to be of practical use. We have found that at low values of Re, therefore at low flow rates, St has a maximum value as shown in Figure 1. The invention uses this phenomenon to increase the vortex and therefore injection frequency during idling, by providing that at the engine idling speed the airflow rate has a Reynolds number at or near the maximum of the Strouhal number: the increased value of St leads to an increased vortex frequency.

Also according to the present invention, an internal combustion engine for operation by the method according to the invention, which is designed to operate at a predetermined idling speed and which has an electronically controlled fuel injection system comprising a Karman vortex flow meter in the engine air intake, an electromagnetic fuel injection valve, and control means responsive to the flow meter and controlling the fuel injection valve in such a way that the valve injects fuel at a frequency corresponding to the vortex velocity detected by the flowmeter, is characterised in that the vortex-generating body of the flowmeter and the engine air intake system are so designed that at the predetermined idling speed of the engine the Strouhal number (St) of the flowmeter as a function of Reynolds number (Re) is at or close to a maximum value lying in the low flow velocity range of the flowmeter.

Brief description of the drawings

Figure 1 is a graph showing the relationship of the Strouhal number, St, to the Reynolds number, Re; and Figure 2 is a cross-sectional diagram illustrating an embodiment of the present invention.

Figure 2 is a cross-sectional diagram illustrating a preferred embodiment of the present invention, wherein an intake port (not shown) of an engine 1 is connected in a gas-tight manner via an intake manifold pipe 2 to a mixture chamber 3, from which the passage of an air-fuel mixture is controlled by means of a throttle valve 3a linked by a suitable linkage mechanism (not shown), to the automobiles' accelerator pedal (not shown).

Air passes into the mixture chamber 3 from the air cleaner 7 via a vortex flow meter 4 which comprises a vortex generating body (4a) which consists typically of a bar of triangulated cross-section, the base of the triangle facing substantially upstream, and the apex of the triangle facing substantially downstream, and which generates vortices in the airflow downstream thereof, an airflow regulator (4b) which regulates the intake airflow passing over the vortex generating body (4a), located upstream of the vortex generating body (4a), and an ultrasonic transmitting and receiving apparatus (4c) which detects the number of aforesaid vortices, housed in a suitable pipe (4d) which is joined in a gas-tight manner at its respective upstream and downstream ends to the aforementioned air cleaner (7) and mixture chamber (3) respectively. The vorticized air passes from the vortex flow meter (4) into the air-fuel mixture chamber (3) where it is mixed with fuel supplied under pressure from a fuel pump (not shown) and injected into the mixture chamber (3) synchronously with a frequency output from the vortex flow meter (4), corresponding to the number of vortices generated, by means of an electromagnetic fuel injection valve (5) provided so as to penetrate a wall of the mixture chamber (3) at a position upstream of the aforementioned throttle valve (3a). The means for controlling the synchronous fuel injection from the valve (5) in relation to the frequency output from the vortex flow meter (4) may comprise an electronic control means, shown symbolically by the box (6) in figure 2. This electronic control means (6) is arranged to control both the timing and duration of the injection from the electromagnetic fuel injection valve (5). The aforementioned air cleaner (7) joined in a gas-tight manner to the upstream end of the vortex flow meter (4) houses an air cleaner element (8), typically constructed of wax paper, and air is supplied into the air cleaner (7) from the atmosphere via an intake pipe (9) mounted or joined to the air cleaner (7) upstream of the air cleaner element (8), in a gas-tight manner.

In a device as hereinabove described, the engine is first started up, whereupon intake air passes from the atmosphere through the intake pipe (9), into and through the air cleaner (7) where any dust or other undesirable particles of matter are removed from the air, producing substantially clean air which passes into the vortex flow meter (4). Within the vortex flow meter (4), the volume of intake air is detected by the flow meter, before passing into the mixture chamber (3). Subsequently, a required quantity of fuel is injected into the mixture chamber (3) by means of the electromagnetic fuel injection valve (5) which is activated by the electronic control means (6) synchronously with the frequency output that corresponds to the vortex speed which is proportional to the intake airflow volume detected by the aforementioned vortex flow meter (4). The synchronously injected fuel is thus mixed with the incoming intake air, and the mixture is passed via the throttle valve (3a) into the intake manifold pipe (2) and into the combustion chamber (not shown) of the engine 1 for combustion.

According to the present invention, for observation of the point A in the graph shown in figure 1, at which the Strouhal number is at a maximum, the Reynolds number is made such that point A in figure 1, at which the Strouhal number is at a maximum in the low flow velocity region, corresponds to the engine's idling state. Specifically, from the graph in figure 1, the Strouhal number is at a maximum with a Reynolds number of approximately 1,300. Thus, to suit this Reynolds number, the width d of the vortex generating body 4a of the vortex flow meter 4 in figure 2, may, for example, by approximately 0.9 cm, and the flow velocity v during idling would be approximately 2.1 m/s.

It is known that the Reynolds number Re becomes:

$$Re = \frac{dv}{v}$$

where
d: the length of an object located in a stream,
v: the velocity of flow, and
v: the dynamic viscosity.

It is also known that the dynamic viscosity v of air is 0.146 $cm^2$/s (at 15°C). Therefore, assuming the width d of the vortex generator 4a to be 0.9 cm, the flow velocity v becomes 210 cm/s=2.1 m/s on the basis of the above equation.

In this way, since the fuel injection frequency is proportional to the vortex frequency and therefore to the Strouhal number, it is possible to increase the Karman vortex generation frequency and fuel injection frequency during idling without producing the earlier discussed pressure losses, and without impairing the Karman vortex detection accuracy, whereby instability during idling is eliminated.

Although the Reynolds number is preferably set at the point (approximately 1,300) at which the Strouhal number is substantially a maximum, in practice similar effects are displayed when the Reynolds number is set in the vicinity of the maximum Strouhal number, for instance in the range 800 to 2,000.

**Claims**

1. A method of electronically controlling fuel injection to an internal combustion engine, in which a Karman vortex flow meter (4) detects the intake airflow volume of the engine, and a fuel injection valve (5) is controlled in dependence on the output signal of the flow meter and injects fuel synchronously with a frequency output corresponding to the vortex velocity from said Karman vortex flow meter (4), characterised in that idling of the engine is conducted in the vicinity of an air intake flow speed at which the Strouhal number (St) as a function of Reynolds number (Re) is substantially a maximum in the low flow velocity range of the Karman vortex flow meter (4).

2. A method as claimed in claim 1, characterised in that the Reynolds number (Re) of the airflow at the idling speed is established in the range of approximately 800 to 2,000, so as to be in the vicinity of the point at which the Strouhal number (St) is at a maximum.

3. A method as claimed in claim 1, characterised in that at the idling speed the Reynolds number (Re) which is proportional to the product of the width (d) of the vortex generating body (4a) and the airflow velocity, is approximately 1,300.

4. A method as claimed in claim 1, 2 or 3 characterised in that the Karman vortexes are generated by a body (4a) of triangular cross section.

5. An internal combustion engine for operation by the method according to claim 1, which is designed to operate at a predetermined idling speed and which has an electronically controlled fuel injection system comprising a Karman vortex flow meter (4) in the engine air intake, an electromagnetic fuel injection valve (5), and control means (6) responsive to the flow meter and controlling the fuel injection valve in such a way that the valve injects fuel at a frequency corresponding to the vortex velocity detected by the flowmeter, characterised in that the vortex-generating body (4a) of the flowmeter and the engine air intake system are so designed that at the predetermined idling speed of the engine and Strouhal number (St) of the flowmeter as a function of Reynolds number (Re) is at or close to a maximum value lying in the low flow velocity range of the flowmeter.

6. An engine according to claim 5 characterized in that the vortex-generating body (4a) is triangular in cross section.

## Patentansprüche

1. Verfahren zur elektronischen Regelung der Krafstoffeinspritzung in einem Verbrennungsmotor, wobei ein Karman'scher Wirbelströmmungsmesser (4) das Einlaßluftvolumen des Motors mißt, und ein Kraftstoffeinspritzventil (5) in Abhängigkeit vom Ausgangssignal des Strömungsmessers gesteuert wird und den Kraftstoff synchron mit einem der Wirbelgeschwindigkeit gemäß dem Karman'schen Wirbel-strömungsmesser (4) entsprechenden Frequenz-signal einspritzt, dadurch gekennzeichnet, daß der Motorleerlauf in die Nähe einer Luftansauggeschwindigkeit geführt wird, bei welcher die eine Funktion der Reynolds-Zahl (Re) darstellende Strouhal-Zahl (St) im Bereich niedriger Strömungsgeschwindigkeiten des Karman'schen Wirbelströmungsmessers (4) ein Maximum erreicht.

2. Verfahren nach Anspruch 1, dadurch gekennzeichnet, daß die Reynolds-Zahl (Re) des Luftstroms im Leerlauf auf den Bereich von etwa 800 bis 2000 eingestellt wird, damit sie in der Nähe desjenigen Punktes liegt, bei dem die Strouhal-Zahl (St) ein Maximum hat.

3. Verfahren nach Anspruch 1, dadurch gekennzeichnet, daß die dem Produkt aus der Breite (d) des wirbelerzeugenden Körpers (4a) und der Luftgeschwindigkeit proportionale Reynolds-Zahl (Re) etwa 1300 beträgt.

4. Verfahren nach Anspruch 1, 2 oder 3, dadurch gekennzeichnet, daß die Karman'schen Wirbel (4a) durch einen Körper (4a) mit dreickigem Querschnitt erzeugt werden.

5. Nach dem Verfahren gemäß Anspruch 1 betriebener Verbrennungsmotor, der mit einer voreingestellten Leerlaufdrehzahl läuft und ein elektronisch gesteuertes Kraftstoffeinspritzsystem mit einem Karman'schen Wirbelströmungsmesser (4) in Lufteinlaß des Motors, ein elektromagnetisches Kraftstoffeinspritzventil (5) und eine Steuereinrichtung (6) aufweist, welche auf den Strömungsmesser anspricht und das Kraftstoffeinspritzventil derart steuert, daß dieses den Kraftstoff bei einer der vom Strömungsmesser gemessenen Wirbelgeschwindigkeit entsprechenden Frequenz einspritzt, dadurch gekennzeichnet, daß der wirbelzeugende Körper (4a) des Strömungsmessers und das Lufteinlaßsystem des Motors so konstruiert sind, daß die eine Funktion der Reynolds-Zahl (Re) darstellende Strouhal-Zahl (St) des Strömungs-messers im Bereich niedriger Strömungsgesch-windigkeiten des Strömungsmessers ein Maximum erreicht oder nahe bei demselben leigt.

6. Verbrennungsmotor nach Anspruch 5, dadurch gekennzeichnet, daß der wirbelerzeugende Körper (4a) dreieckigen Querschnitt aufweist.

## Revendications

1. Procédé de contrôle électronique de l'injection du carburant dans un moteur à combustion interne, dans laquelle un débit-mètre Karman (4) pour mouvement tourbillonnaire détecte le volume du débit d'air d'admission du moteur, et dans lequel un carburateur d'injection de carburant (5) est contrôlé en fonction du signal de sortie du débit-mètre et injecte le carburant de manière synchrone avec une fréquence de débit correspondant à la vitesse tourbillonnaire signalée par ledit débit-mètre Karman (4) pour mouvement tourbillonnaire, le procédé étant caractérisé en ce que le ralenti du moteur a lieu près d'une vitesse de débit d'admission d'air à laquelle le nombre de Strouhal (St) en tant que fonction du nombre de Reynolds (Re) est rigoureusement un maximum dans la gamme de vitesse de débit réduit du débit-mètre Karman (4) pour mouvement tourbillonnaire.

2. Procédé selon la revendication 1, caractérisé en ce que le nombre de Reynolds (Re) du débit d'air à la vitesse de ralenti s'établit dans la gamme de 800 à 2.000 approximativement, de façon à se trouver à proximité du point auquel le nombre de Strouhal (St) est au maximum.

3. Procédé selon la revendication 1, caractérisé en ce qu'à la vitesse de ralenti, le nombre de Reynolds (Re) qui est proportionnel au produit de la largeur (d) du corps générateur de tourbillon (4a) et de la vitesse de débit d'air, est approximativement 1.300.

4. Procédé selon les revendications 1, 2 ou 3, caractérisé en ce que les tourbillons Karman sont engendrés par un corps (4a) de section triangulaire.

5. Moteur à combustion interne fonctionnant selon le procédé de la revendication 1, conçu pour tourner à une vitesse de ralenti pré-déterminée et comportant un système d'injection de carburant contrôlé électroniquement, ce système comprenant: un débit-mètre Karman pour mouvement tourbillonnaire (4) dans l'admission d'air du moteur; un carburateur d'injection de carburant électromagnétique (5); et un moyen de commande (6) répondant au débit-mètre et contrôlant le carburateur d'injection de carburant de manière que celui-ci injecte du carburant à une fréquence correspondant à la vitesse tourbillonnaire détectée par le débit-mètre, le dispositif étant caractérisé par le fait que le corps générateur de tourbillon (4a) du débit-mètre et le système d'admission d'air du moteur sont conçus de manière qu'à la vitesse de ralenti prédéterminée du moteur, le nombre de Strouhal (St) du débit-mètre en tant que fonction du nombre de Reynolds (Re) soit à une valeur maximum, ou proche d'une valeur maximum se situant dans la gamme de vitesse de débit réduit du débit-mètre.

6. Un moteur selon la revendication 5, caractérisé en ce que le corps générateur de tourbillon (4a) est triangulaire en section transversale.

FIG. 1

ATMOSPHERIC
AIR

FIG. 2.